# EUROPÄISCHE PATENTSCHRIFT

(11) **EP 4 146 366 B1**
(45) Veröffentlichungstag und Bekanntmachung des Hinweises auf die Patenterteilung: **26.02.2025**
(21) Anmeldenummer: 22716426.6
(22) Anmeldetag: 30.03.2022
(51) Int. Cl.: B01D 29/15, B01D 35/147, B01D 35/157

(54) **FILTERVORRICHTUNG**
FILTER APPARATUS
APPAREIL DE FILTRATION

(30) Priorität: 17.04.2021 DE 102021002024
(43) Veröffentlichungstag der Anmeldung: 15.03.2023
(73) Patentinhaber: Hydac Filtertechnik GmbH, 66280 Sulzbach/Saar (DE)
(72) Erfinder: SAKRASCHINSKY, Michael, 66386 St. Ingbert (DE); RÖDER, Dirk, 66123 Saarbrücken (DE); BRAUNE, Martin, 66130 Brebach-Fechingen (DE)
(74) Vertreter: Bartels und Partner, Patentanwälte
(86) Internationale Anmeldenummer: PCT/EP2022/058358
(87) Internationale Veröffentlichungsnummer: WO 2022/218701

(56) Entgegenhaltungen:
- IT-A1- MI20 111 315
- KR-A- 20120 064 955
- US-A1- 2007 108 119
- US-A1- 2018 161 707

## Beschreibung

Die Erfindung betrifft eine Filtervorrichtung mit den Merkmalen im Oberbegriff von Anspruch 1.

Eine derartige Filtervorrichtung ist aus der nachveröffentlichten DE 10 2020 004 489 bekannt. Die Filtervorrichtung weist ein Filtergehäuse auf, das eine Anschlussstelle für die Zufuhr eines Unfiltratstroms und eine weitere Anschlussstelle für die Abfuhr eines Filtratstroms aufweist. In der Filtervorrichtung ist ein hohlzylindrisches Filterelement mit einem Filtermaterial angeordnet, um das Unfiltrat zu filtern. Des Weiteren ist eine Trenneinrichtung vorgesehen, um die Anschlussstellen voneinander zu trennen. Diese Trenneinrichtung ist im Filtergehäuse in Form einer schrägen Trennwand angeordnet und zur Absperrung von Zufuhr und Abfuhr drehbar. Eine derartige Filtervorrichtung bietet viele Vorteile beim Filterelementwechsel, insbesondere wenn die Hydraulikleitungen, die an die Anschlussstellen angeschlossen sind, drucklos sind, denn dann kann das Filterelement aus der Filtervorrichtung nach Abschrauben eines Deckels entnommen werden, wobei relativ wenig Flüssigkeit aus den Hydraulikleitungen in das Filtergehäuse einfließt.

Die IT MI20 111 315 A1 beschreibt eine Filtervorrichtung mit einem Filtergehäuse, das mindestens zwei Anschlussstellen, wie einen Zulauf für Unfiltrat und einen Ablauf für Filtrat, aufweist sowie ein austauschbares Filterelement aufnimmt, wobei zumindest eine Ventileinrichtung vorgesehen ist, die in einer Öffnungsstellung einen Fluidfluss zwischen einer der Anschlussstellen und dem Filterelement ermöglicht und in einer Schließstellung diesen Fluidfluss unterbindet, und wobei die Ventileinrichtung mittels einer Ansteuereinrichtung zwischen der Öffnungsstellung und der Schließstellung bewegbar ist, wobei die eine Ventileinrichtung ein Zuflussventil ist.

Weitere Filtervorrichtungen gehen aus der US 2007/0108119 A1 und der KR 10-2012-0064955 hervor.

Ausgehend von diesem Stand der Technik liegt der Erfindung die Aufgabe zugrunde, eine verbesserte Filtervorrichtung aufzuzeigen, die einen servicefreundlichen Filterelementwechsel insbesondere auch dann ermöglicht, wenn die an die Filtervorrichtung angeschlossenen Hydraulikleitungen noch unter Druck stehen.

Diese Aufgabe wird durch eine Filtervorrichtung mit den Merkmalen des Patentanspruchs 1 gelöst.

Es ist zumindest eine Ventileinrichtung vorgesehen, die in einer Öffnungsstellung einen Fluidfluss zwischen einer der Anschlussstellen und dem Filterelement ermöglicht und in einer Schließstellung diesen Fluidfluss unterbindet; und die Ventileinrichtung ist mittels einer Ansteuereinrichtung zwischen der Öffnungsstellung und der Schließstellung bewegbar. Auf diese Weise lässt sich auch bei unter Druck stehenden Hydraulikleitungen das Einfließen von Hydraulikflüssigkeit in das Gehäuse während des Filterelementwechsels sicher unterbinden. Dadurch wird das Öffnen des Filtergehäuses und ein Austausch des verbrauchten Filterelements gegen ein Neuelement wesentlich erleichtert. Es sind z. B. keine oder weniger Vorkehrungen gegen aus dem Filtergehäuse tropfende Flüssigkeit zu treffen. Durch die Anordnung zumindest eines Ventils im Ventilgehäuse wird zudem die im Filtergehäuse befindliche Menge an Flüssigkeit, die beim Öffnen des Filtergehäuses austreten könnte, begrenzt oder zumindest stark reduziert.

Gemäß dem Kennzeichen von Anspruch 1 ist das Zuflussventil im Fluidfluss zwischen dem Zulauf und einer Außenseite des Filterelements angeordnet und weist ein Zuflussventilschließglied auf, das durch einen mit einer Öffnung versehenen Zylinderwandabschnitt gebildet ist, der in einem Schlitz im Filtergehäuse bewegbar angeordnet ist; und dass die Öffnung in der Öffnungsstellung in Überdeckung mit dem Zulauf ist. Durch das im Filtergehäuse verschiebbar angeordnete Zuflussventilschließglied wird ein Zuflussventil aufgezeigt, das auch sehr hohen Drücken standhält.

Eine Öffnung im Zylinderwandabschnitt kann die Form eines Langlochs haben. Ein Langloch lässt sich sehr einfach in den Zylinderwandabschnitt einbringen und stellt sicher, dass die Öffnung einen maximalen Querschnitt hat.

Mit Vorteil ist der Zylinderwandabschnitt an einem Plattenteil befestigt, das zwischen dem Filtergehäuse und dem Filterelement angeordnet ist; und der Zylinderwandabschnitt weist vorzugsweise zumindest einen Pin auf, der in ein Loch im Plattenteil eingeschoben ist. Das Plattenteil übernimmt hierbei die Funktion eines Übertragungsglieds, um eine Bewegung der Ansteuereinrichtung zum Zuflussventil zu übertragen. Dadurch, dass lediglich ein Pin benötigt wird, der einfach in das Plattenteil eingesteckt ist, wird zudem eine besonders montagefreundliche Lösung aufgezeigt, die dennoch im täglichen Gebrauch hinreichend robust ist.

Das Plattenteil kann mehrere, vorzugsweise nierenförmige, Öffnungen für den Fluidfluss zwischen Zulauf und der Außenseite des Filterelements aufweisen. Mithin kann die Flüssigkeit, nachdem sie das Zuflussventil passiert hat, auf direktem Wege zur Außenseite des Filterelements strömen.

Mit Vorteil weist das Plattenteil einen ersten Filterelementstutzen auf, in den das Filterelement einschraubbar ist. Somit kann das Filterelement am Plattenteil festgelegt und eine Drehbewegung des Filterelements auf das Plattenteil übertragen werden.

Vorteilhaft weist das Plattenelement zumindest eine Versteifungsstrebe am Filterelementstutzen auf. Die Versteifungsstrebe stützt dabei ein Flanschteil des Plattenteils und stellt die Führung des Zylinderwandabschnitt sicher. Das Plattenteil kann einen Filtergehäusestutzen aufweisen, der vorzugsweise außenumfangseitig eine Umfangsnut aufweist, in der ein Dichtring zur Abdichtung des Plattenteils gegenüber dem Filtergehäuse anordenbar ist. Durch diesen Filtergehäusestutzen kann ein Filtrat vom Inneren des Filterelements sicher zum Ablauf geleitet werden. Darüber hinaus wird durch den Filtergehäusestutzen eine sichere Führung des Plattenteils im Filtergehäuse gewährleistet.

Das Plattenteil ist bevorzugt auf seiner Unterseite durch einen Sprengring im Filtergehäuse festgelegt. Dadurch ist das Plattenteil verliersicher im Filtergehäuse aufgenommen und kann nicht zusammen mit dem Filterelement aus dem Filtergehäuse gezogen werden.

Besonders vorteilhaft ist es, wenn eine weitere Ventilvorrichtung ein Abflussventil ist, das im Fluidfluss zwischen einer Innenseite des Filterelements und dem Ablauf angeordnet ist und ein, vorzugsweise kugelabschnittsförmiges, Abflussventilschließglied aufweist, das an einem Anschlag, insbesondere an dem Filtergehäusestutzen, dichtend zur Anlage kommt und durch eine Feder in die Schließstellung beaufschlagt ist. Auf diese Weise wird eine Trennung eines Fluidflusses vom Filterelement zum Ablauf bereitgestellt, die sich bei Bedarf, das heißt bei einem anstehenden Fluiddruck, öffnen lässt und geschlossen wird, sobald dieser Druck nachlässt bzw. der Druck am Ablauf stärker als im Ventilelement ist. Weil das Abflussventilschließglied kugelabschnittsförmig ist, weist es eine größere Toleranz bei der Anlage am Ventilsitz auf. Somit kann der Ventilsitz und/oder das Abflussventilschließglied in der Schließstellung einen Winkel zur Längsachse der Filtervorrichtung aufweisen und das Abflussventil dennoch sicher schließen.

Die Feder kann rückseitig durch einen Dorn im Filtergehäuse geführt sein. Dieser Dorn kann ein einstückiger Bestandteil des Filtergehäuses sein, sodass die Montage vereinfacht ist.

Mit Vorteil weist das Abflussventilschließglied eine zentrale Bohrung auf, in die der Dorn, abhängig von der Stellung des Abflussventilschließglieds, einführbar ist. Auf diese Weise ist eine sichere axiale Führung des Abflussventilschließglieds erreichbar, wenn der Dorn in die zentrale Bohrung eingeschoben ist.

Das Abflussventilschließglied kann eine axial vorstehende Führungshülse aufweisen, die an einer Außenseite der Feder anliegt. Auch diese Führungshülse dient dazu, das Abflussventilschließglied in axialer Richtung zu führen. Darüber hinaus wird ein Knicken der Feder aufgrund der Länge verhindert.

Vorteilhaft weist das Abflussventilschließglied eine Anschlaghülse für die Feder auf. Auf dieser Anschlaghülse kann sich die Feder abstützen. Diese Lösung trägt dazu bei, ein besonders leichtes Abflussventilschließglied bereitzustellen.

Das Abflussventilschließglied kann auch bis auf die Führungshülse und/ oder die Anschlaghülse hohl sein. Auf diese Weise wird das Gewicht des Abflussventilschließglieds nochmals wesentlich verringert, sodass ein geringerer Fluiddruck ausreichend ist, um das Abflussventilschließglied vom Anschlag abzuheben.

Das Abflussventilschließglied kann in einem zylinderförmigen Hohlraum des Filtergehäuses bewegbar angeordnet sein. Mithin müssen keine zusätzlichen Teile in der Filtervorrichtung vorgesehen werden, um das Abflussventilschließglied zu führen.

Die Erfindung ist nachfolgend anhand von in den Zeichnungen dargestellten Ausführungsbeispielen näher erläutert, die schematisch und nicht maßstäblich dargestellt sind. Es zeigen:
- Fig. 1 bis 3: einen Querschnitt, eine Seitenansicht und eine Explosionsdarstellung der erfindungsgemäßen Filtervorrichtung;
- Fig. 4: eine Ansicht von unten auf ein Gehäuseoberteil;
- Fig. 5: eine perspektivische Schnittdarstellung eines Kopfteils des Gehäuseoberteils;
- Fig. 6 bis 9: perspektivische Ansichten des Plattenteils und des Zylinderwandabschnitts;
- Fig. 10 und 11: einen Querschnitt und eine perspektivische Ansicht der Filtervorrichtung im geöffneten Zustand;
- Fig. 12 bis 14: einen Querschnitt und zwei perspektivische Ansichten der Filtervorrichtung im geschlossenen Zustand;
- Fig. 15 bis 17: einen Querschnitt, eine Seitenansicht und eine perspektivische Ansicht eines Filterelements;
- Fig. 18 und 19: einen Querschnitt und eine perspektivische Ansicht einer oberen Endkappe des Filterelements;
- Fig. 20 bis 24: verschiedene perspektivische Ansichten der unteren Endkappe des Filterelements;
- Fig. 25: eine perspektivische Ansicht eines Bypassventils;
- Fig. 26 und 27: perspektivische Ansichten eines Gehäuseunterteils der Filtervorrichtung;
- Fig. 28 und 29: Detaildarstellungen von Drehteilen im Gehäuseunterteil; und
- Fig. 30 bis 32: perspektivische Ansichten des Gehäuseunterteils mit eingesetztem Filterelement.

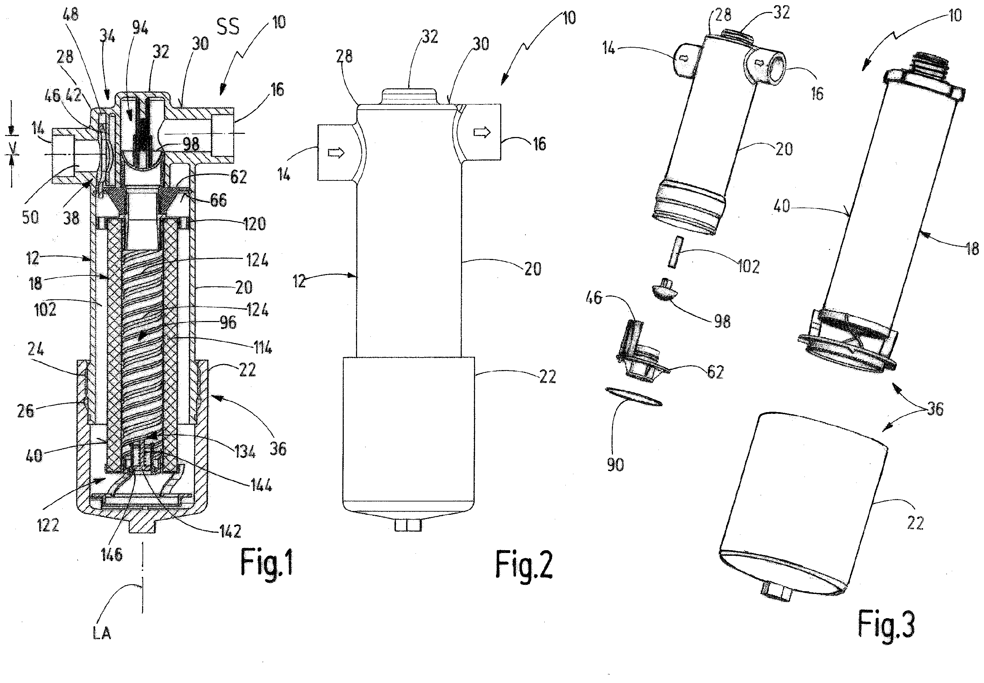

Die Fig. 1 bis 3 zeigen eine erfindungsgemäße Filtervorrichtung 10 mit einem Filtergehäuse 12, das mindestens zwei Anschlussstellen 14, 16, wie einen Zulauf 14 für Unfiltrat und einen Ablauf 16 für Filtrat, aufweist, sowie ein austauschbares Filterelement 18 aufnimmt. Das Filtergehäuse 12 ist zweiteilig ausgeführt und hat ein Gehäuseoberteil 20 und ein Gehäuseunterteil 22, die über ein Gewinde 24 miteinander verschraubt und durch eine Dichtung 26 gegeneinander abgedichtet sind. Der Zulauf 14 und der Ablauf 16 sind im Bereich eines Gehäusekopfes 28 auf gegenüberliegenden Seiten des Filtergehäuses 12 angeordnet, wobei sie einen axialen Versatz V aufweisen. Auf der Oberseite 30 des Gehäuseoberteils 20 befindet sich ein axialer Vorsprung 32.

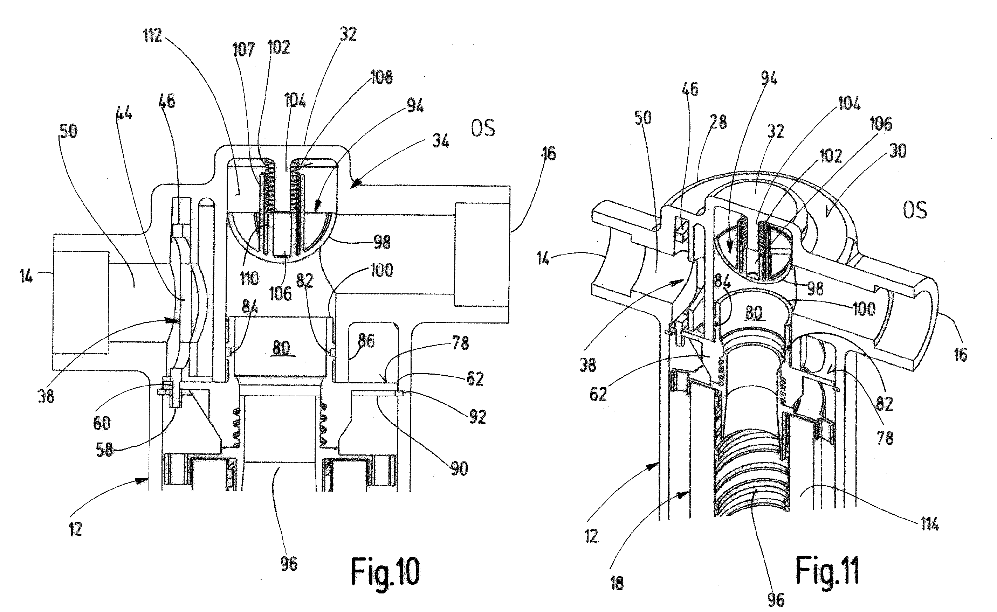

Erfindungsgemäß ist zumindest eine Ventileinrichtung 34 vorgesehen, die in einer Öffnungsstellung OS (Fig. 10, 11) einen Fluidfluss zwischen einer der Anschlussstellen 14, 16 und dem Filterelement 18 ermöglicht und in einer Schließstellung SS diesen Fluidfluss unterbindet. Weiter ist die Ventileinrichtung 34 mittels einer Ansteuereinrichtung 36, die das Gehäuseunterteil 22 und das Filterelement 18 umfasst, zwischen der Öffnungsstellung OS und der Schließstellung SS bewegbar.

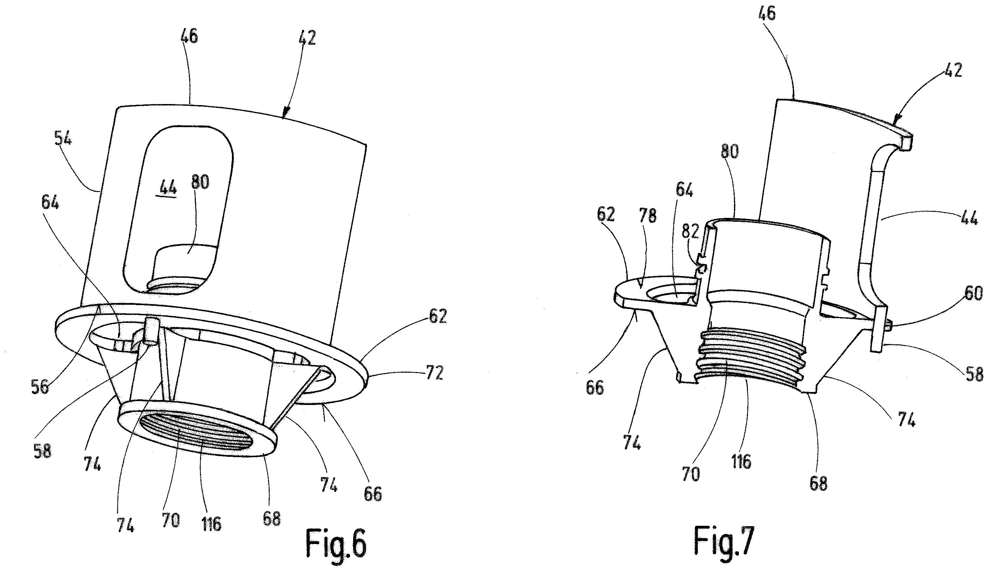

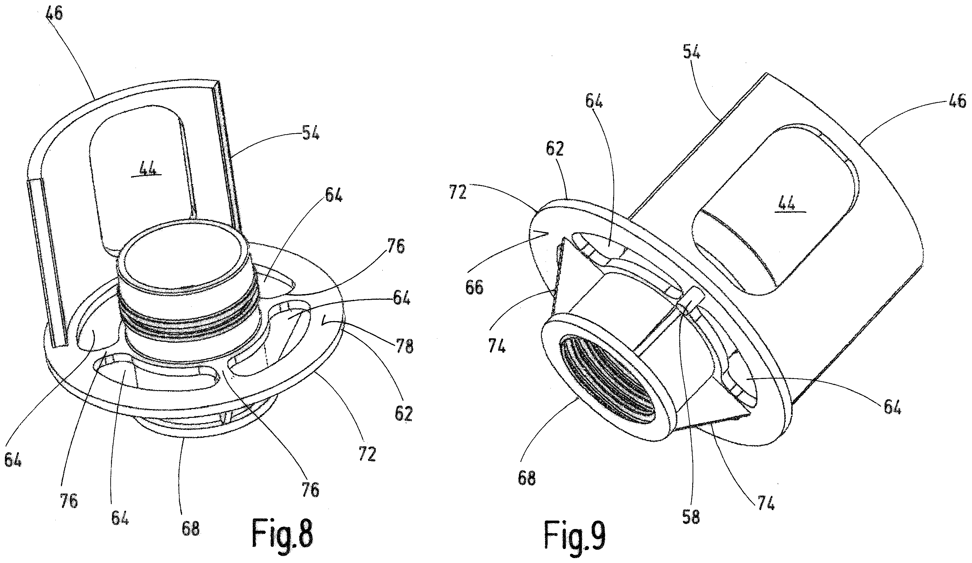

Eine solche Ventileinrichtung 34 ist ein Zuflussventil 38, das in den Fig. 1 und 3 bis 14 näher dargestellt ist. Das Zuflussventil 38 ist im Fluidfluss zwischen dem Zulauf 14 und einer Außenseite 40 des Filterelements 18 angeordnet und weist ein Zuflussventilschließglied 42 auf, das durch einen mit einer Öffnung 44 versehenen Zylinderwandabschnitt 46 gebildet ist, der in den Fig. 6 bis 9 gezeigt und der in einem halbkreisförmigen Schlitz 48 im Filtergehäuse 12 bewegbar angeordnet ist. Die Öffnung 44 des Zylinderwandabschnitts 46 ist in der Öffnungsstellung OS in Überdeckung mit einer Gehäusebohrung 50 des Zulaufs 14. Das Gehäuseoberteil 20 weist auf beiden Seiten des Schlitzes 48 die Gehäusebohrung 50 auf, die einen Fluidfluss vom Zulauf 14 in das Innere 52 des Filtergehäuses 12 in der Öffnungsstellung OS des Zuflussventils 38 ermöglicht. Die Öffnung 44 im Zylinderwandabschnitt 46 hat die Form eines Langlochs und ist größer als die Gehäusebohrung 50 des Zulaufs 14. Der Zylinderwandabschnitt 46 weist die Öffnung 44 in der Seitenansicht (Fig. 6 und 9) näher an seinem linken Ende 54 auf. Angrenzend an die Öffnung 44 ist an einer Unterseite 56 des Zylinderwandabschnitts 46 ein Pin 58 vorgesehen, der in ein Loch 60 in einem Plattenteil 62 eingeschoben ist.

Das Plattenteil 62 weist mehrere, vorzugsweise nierenförmige Öffnungen 64 auf für den Fluidfluss zwischen Zulauf 14 und der Außenseite 40 des Filterelements 18. Weiterhin weist das Plattenteil 62 an seiner Unterseite 66 einen Filterelementstutzen 68 auf, in den das Filterelement 18 einschraubbar ist. Hierzu ist ein Innengewinde 70 vorgesehen. Wie man in den Fig. 8 und 9 sehen kann, ist der Filterelementstutzen 68 gegenüber einem Flansch 72 des Plattenteils 62 durch Versteifungsstreben 74 abgestützt. Die Versteifungsstreben 74 sind auf einem Teilkreis versetzt angeordnet und verstärken einen Steg 76 zwischen den Enden der Öffnungen 64 des Plattenteils 62. Auf der Oberseite 78 weist das Plattenteil 62 einen Filtergehäusestutzen 80 auf, der außenumfangsseitig eine Umfangsnut 82 aufweist, in der ein Dichtring 84 zur Abdichtung des Plattenteils 62 gegenüber einem im Filtergehäuse 12 angeordneten Aufnahmestutzen 86 vorgesehen ist. Wie man insbesondere in den Fig. 1 und 10 bis 14 sehen kann, ist das Plattenteil 62 im Filtergehäuse 12 an den Aufnahmestutzen 86 angelegt und auf der Unterseite 66 durch einen Sprengring 90 gehalten, der in eine Umfangsnut 92 im Filtergehäuse 12 eingesetzt ist.

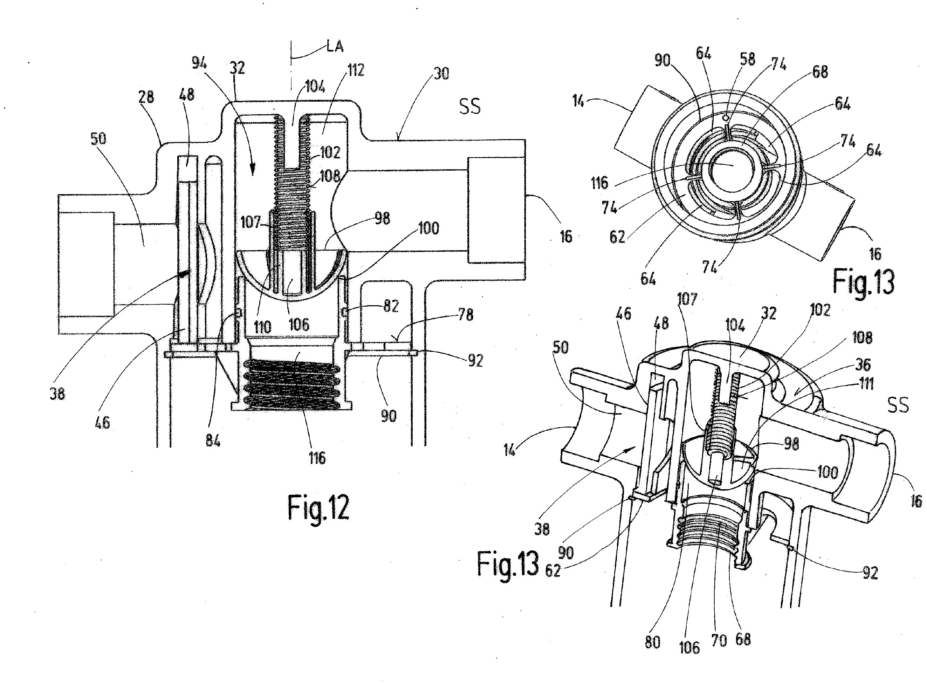

Eine weitere Ventileinrichtung 34 ist ein Abflussventil 94, das im Fluidfluss zwischen einer Innenseite 96 des Filterelements 18 und dem Ablauf 16 angeordnet ist und ein kugelabschnittsförmiges Abflussventilschließglied 98 aufweist, das an einem Anschlag 100 am Filtergehäusestutzen 80 des Plattenteils 62 dichtend zur Anlage kommt und durch eine Feder 102 in die Schließstellung SS beaufschlagt ist. Die Feder 102 ist rückseitig durch einen Dorn 104 des Filtergehäuses 12 geführt. Das Abflussventilschließglied 98 weist eine zentrale Bohrung 106 auf, in die der Dorn 104 abhängig von der Stellung des Abflussventilschließglieds 98 einführbar ist, wie man insbesondere in den Fig. 10 und 11 sehen kann. Das Abflussventilschließglied 98 weist eine in Richtung des Dorns 104 axial vorstehende Führungshülse 107 auf, die an einer Außenseite 108 der Feder 102 anliegt. Weiterhin weist das Abflussventilschließglied 98 eine Anschlaghülse 110 für die Feder 102 auf. Um das Abflussventilschließglied 98 möglichst leicht auszuführen, ist dieses bis auf die Führungshülse 106 und die Anschlaghülse 110 sowie eine Aussteifung 111 (Fig. 13) hohl. Das Abflussventilschließglied 98 ist in einem zylinderförmigen Hohlraum 112 des Filtergehäuses 12 bewegbar angeordnet. Der Abfluss 16 erstreckt sich in radialer Richtung von diesem Hohlraum 112 weg.

In den Fig. 10 und 11 ist die Filtervorrichtung 10 mit den Ventileinrichtungen 34 in der jeweiligen Öffnungsstellung OS gezeigt. Man sieht, dass die Öffnung 44 des Zylinderwandabschnitts 46 des Zuflussventils 38 in Überdeckung mit der Bohrung 50 des Zulaufs 14 ist. In diese Position wurde der Zylinderwandabschnitt 46 beim Eindrehen des Filterelements 18 in das Plattenteil 62 gedreht. Aufgrund des Widerstands des Zylinderwandabschnitts 46 wird die Öffnungsstellung OS erst dann erreicht, wenn das Filterelement 18 bereits vollständig in das Plattenteil 62 eingeschraubt ist. Kommt es dann zu einem Fluidfluss zwischen Zufluss 14 und Abfluss 16, strömt die unfiltrierte Flüssigkeit vom Zulauf 14 durch das Zuflussventil 38 und die nierenförmigen Öffnungen 64 in dem Flansch 72 des Plattenteils 62 zur Außenseite 40 des Filterelements 18, durch ein Filtermedium 114 des Filterelements 18 hindurch zu dessen Innenseite 96 und von dort gefiltert durch die zentrale Öffnung 116 des Plattenteils 62 zum Abflussventil 94. Wenn der Druck ausreichend stark ist, wird das Abflussventilschließglied 98 von seinem Ventilsitz 100 abgehoben und die gefilterte Flüssigkeit kann zum Abfluss 16 strömen.

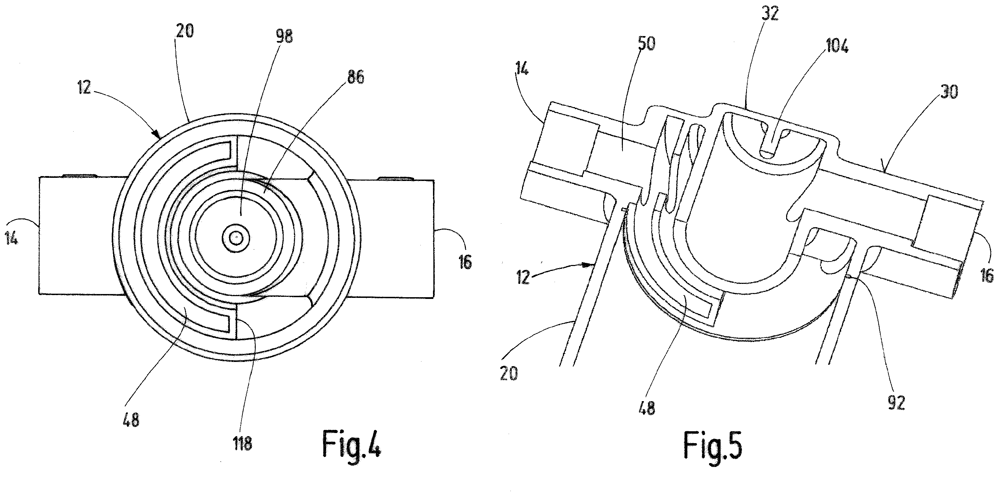

In den Fig. 12 bis 14 ist die Filtervorrichtung 10 mit den Ventileinrichtungen 34 in der Schließstellung SS gezeigt. In der Schließstellung SS ist die Verbindung vom Zufluss 14 zum Innenraum 102 des Filtergehäuses 12 durch den Zylinderwandabschnitt 46 unterbrochen. Auch das Abflussventilschließglied 98 liegt an seinem Ventilsitz 100 an. Wird das Gehäuseunterteil 22 vom Gehäuseoberteil 20 abgeschraubt, so wird das Filterelement 18 mitgedreht. Aufgrund der Verschraubung von Filterelement 18 und Plattenteil 62 wird das Plattenteil 62 und der Zylinderwandabschnitt 46 zu Beginn ebenfalls mitgedreht bis der Zylinderwandabschnitt 46 an einem Ende 118 (Fig. 4) seines Gehäuseschlitzes 48 anstößt. Erst dann wird das Filterelement 18 aus dem Plattenteil 62 ausgeschraubt. Erst nachdem das Filterelement 18 vollständig aus dem Plattenteil 62 geschraubt ist, kann das Gehäuseunterteil 22 vom Gehäuseoberteil 20 vollständig abgeschraubt werden.

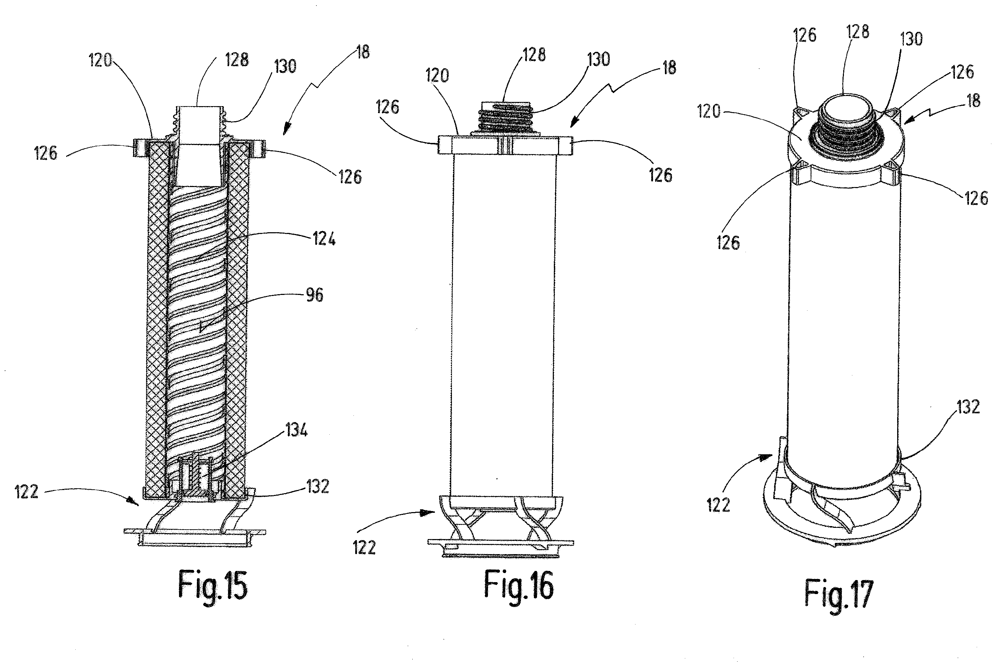

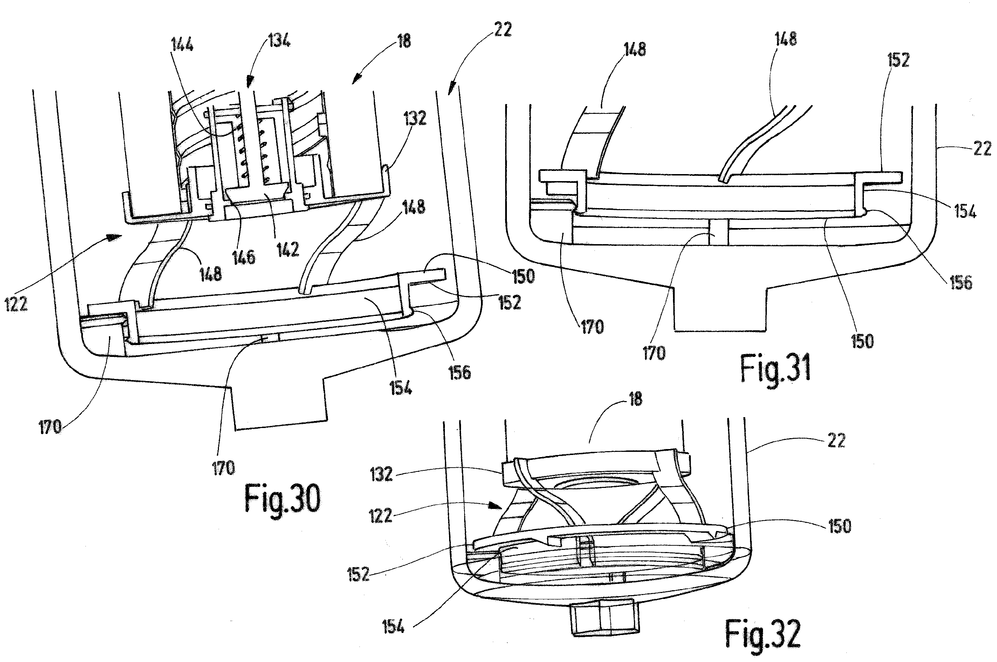

Der weitere Aufbau der Filtervorrichtung 10 unterhalb des Plattenteils 62 ist im Prinzip durch die nachveröffentlichte DE 10 2020 004 489 bekannt und wird daher im Folgenden anhand der Fig. 1 bis 3 und 15 bis 32 nur noch überblicksartig beschrieben.

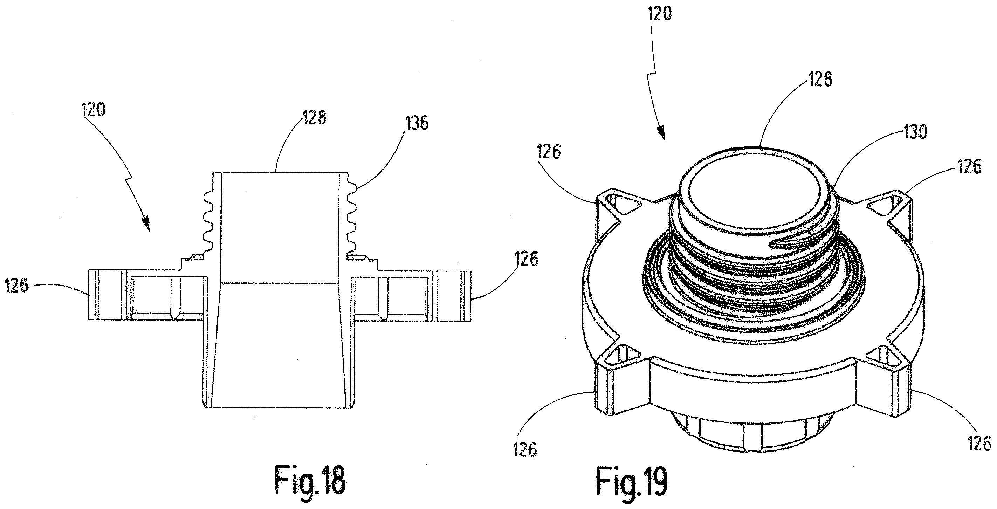

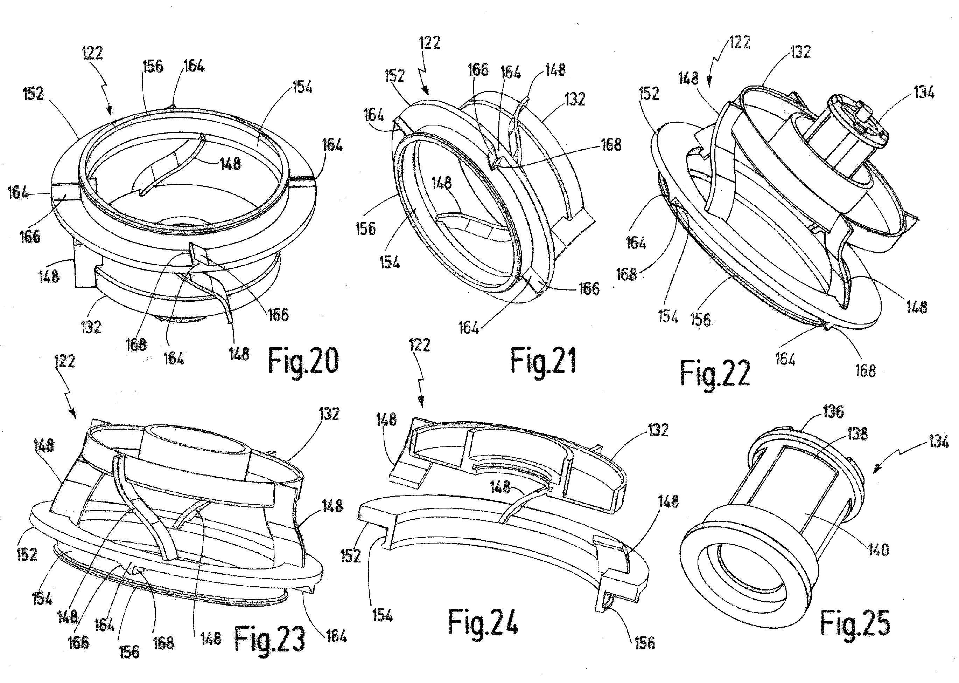

Das Filterelement 18 weist das Filtermedium 114 auf, das zwischen einer oberen Endkappe 120 und einer unteren Endkappe 122 angeordnet ist, und durch diese eingefasst ist. Auf einer Innenseite 96 des Filtermediums 114 ist ein zylinderförmiges Stützrohr 124 vorgesehen. Die obere Endkappe 120 weist umfangsseitig vier auf einem Teilkreis gleichmäßig versetzt angeordnete Vorkragungen 126 auf, welche die Handhabung des Filterelements 18 beim Abziehen vom Gehäuseunterteil 22 erleichtern sollen. An der oberen Endkappe 120 ist ein Gewindestutzen 128 mit einem Außengewinde 130 vorgesehen, der in den Fig. 18 und 19 näher gezeigt ist. Die untere Endkappe 122 des Filterelements 18 ist mehrteilig ausgeführt, wobei ein Einfassring 132 das Filterelement 18 einfasst und ein Bypassventil 134 hält. In den Einfassring 132 ist das Bypassventil 134 austauschbar eingesetzt. Dieses weist einen Käfig 136 mit Fenstern 138 auf, in denen ein grobmaschiges Filtergewebe 140 vorgesehen ist, wie man in Fig. 25 sehen kann. Das Bypassventil 134 weist ein Bypassventilschließglied 142 auf, das durch eine Feder 144 in eine Schließstellung SS beaufschlagt ist. Das Bypassventilschließglied 142 ist im Querschnitt T-förmig und gelangt an einem Ventilsitz 146 im Käfig 136 zur Anlage.

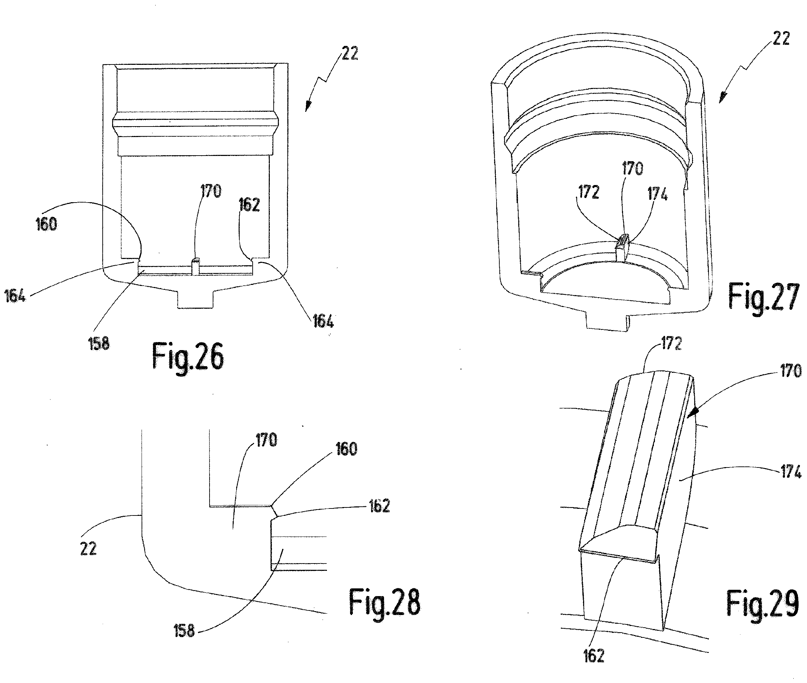

Mit diesem Einfassring 132 ist über vier S-förmige Federbänder 148 ein Befestigungsring 150 verbunden. Der Befestigungsring 150 hat einen größeren Durchmesser als der Einfassring 132. Der Befestigungsring 150 ist in das Gehäuseunterteil 22 einschiebbar und dort rastend befestigbar. Der Befestigungsring 150 weist dazu einen Flansch 152 und einen sich vom Flansch 152 axial nach unten weg erstreckenden Stutzen 154 auf. Der Stutzen 154 ist außenseitig mit einem Rastbund 156 versehen, über den das Filterelement 18 im Gehäuseunterteil 22 in einer Ausnehmung 158, die an einem oberen Ende 160 eine nach innen eingezogene Raste 162 aufweist, lösbar festlegbar ist. Am Flansch 152 sind - ebenfalls auf einem Teilkreis gleichmäßig versetzt - vier Mitnehmer 164 angeordnet, die schräge Flächen 166 und vertikal verlaufende Anlageflächen 168 aufweisen, die mit Drehteilen 170 am Gehäuseunterteil 22 in Eingriff kommen können. Die Drehteile 170 sind in den Fig. 26 bis 29 gezeigt und weisen ebenfalls eine Form mit einer schrägen Fläche 172 und einer vertikalen Fläche 174 auf, so dass die Mitnehmer 164 und die Drehteile 170 in einer Drehrichtung des Gehäuseunterteils 22 im Uhrzeigersinn beim Zuschrauben aneinander entlanggleiten können und bei einer Drehung in Aufschraubrichtung gegen den Uhrzeigersinn in Eingriff geraten.

Das Gehäuseunterteil 22 ist über das Gewinde 24 am Gehäusehauptteil 20 festgelegt. Das Filterelement 18 weist das weitere Gewinde 130 auf, um am Plattenteil 62 befestigt werden zu können. Die Gewindesteigungen dieser beiden Gewinde 24, 130 unterscheiden sich, um sicherzustellen, dass beim Abdrehen des Gehäuseunterteils 22 das Filterelement 18 zuerst aus dem Plattenteil 62 geschraubt wird, ehe es gemeinsam mit dem Gehäuseunterteil 22 aus dem Gehäuseoberteil 20 ausgeschraubt wird. Die Federelemente 148 zwischen den unteren Endkappenteilen 132, 150 sind dazu vorgesehen, einen Längenausgleich zu ermöglichen. Beim Einschrauben des Filterelements 18 ist das Vorgehen umgekehrt. Zuerst wird das Federelement 148 in das Plattenteil 62 eingeschraubt und sodann das Gehäuseunterteil 22 final an das Gehäuseoberteil 20 angeschraubt.

Das Filtergehäuse 12, das Filterelement 18, das Plattenteil 62 und das Abflussventil 98 sind koaxial zur Längsachse LA angeordnet.

Nachfolgend wird die Funktionsweise der Filtervorrichtung beschrieben.

Beim Abschrauben des Gehäuseunterteils 22 vom Gehäuseoberteil 20 wird das Filterelement 18 im Filtergehäuse 12 mitgedreht. In einer ersten Phase wird auch das Plattenteil 62 zusammen mit dem Zuflussventilschließglied 46 mitgedreht, bis dieses an dem einen Ende 118 des Gehäuseschlitzes 48 zur Anlage kommt. Diese Anlage verhindert, dass das Plattenteil 62 weitergedreht werden kann. Dies ermöglicht es, in einer zweiten Phase das Filterelement 18 aus dem Plattenteil 62 herauszudrehen, während das Filtergehäuse 12 nach außen weiterhin geschlossen bleibt. Während des Herausdrehens des Filterelements 18 aus dem Plattenteil 62 federn die Federelemente 148 ein und ermöglichen somit einen Längenausgleich. Sodann wird das Gehäuseunterteil 22 vom Gehäuseoberteil 20 vollständig abgeschraubt, wobei das Filterelement 18 am Gehäuseunterteil 22 rastend befestigt bleibt. Abschließend kann das Filterelement 18 vom Gehäuseunterteil 22 abgenommen und durch ein neues Filterelement 18 ersetzt werden.

Beim Einbau eines neuen Filterelements 18 wird dieses in das Gehäuseunterteil 22 eingesteckt und in das Gehäuseoberteil 20 eingeschoben. Das Gehäuseunterteil 22 wird dann auf das Gehäuseoberteil 20 geschraubt, wobei das Filterelement 18 mitgedreht und in das Plattenteil 62 eingeschraubt wird. Durch das Einschrauben des Filterelements 18 wird das Zuflussventil 38 in die Öffnungsstellung bewegt. Wenn das Filterelement 18 vollständig in das Plattenteil 62 eingeschraubt ist, können die Mitnehmer 164 und die Drehteile 170 an der unteren Endkappe 122 und am Gehäuseunterteil 22 über ihre jeweiligen Schrägflächen 164, 172 aneinander abgleiten, so dass das Gehäuseunterteil 22 vollständig aufgeschraubt werden kann, ohne das Filterelement 18 weiter mitzudrehen.

Durch die erfindungsgemäße Filtervorrichtung 10 wird eine Lösung aufgezeigt, um einen Innenraum 102 eines Filtergehäuses 12 von einem Zufluss 14 und einem Abfluss 16 wirksam durch Ventileinrichtungen 34 zu trennen, wenn das Filtergehäuse 12 aufgeschraubt wird, um das Filterelement 18 zu ersetzen. Dies hat so keine Entsprechung im Stand der Technik.

Es versteht sich, dass Bezeichnungen wie "oben" und "unten" in Bezug auf die Bildebene der jeweiligen Zeichnung gemeint sind. In der tatsächlichen Einbausituation kann die Filtervorrichtung 10 in einem Winkel zur Vertikalen angeordnet sein.

## Patentansprüche

1. Filtervorrichtung mit einem Filtergehäuse (12), das mindestens zwei Anschlussstellen (14, 16), wie einen Zulauf (14) für Unfiltrat und einen Ablauf (16) für Filtrat, aufweist sowie ein austauschbares Filterelement (18) aufnimmt, wobei zumindest eine Ventileinrichtung (34) vorgesehen ist, die in einer Öffnungsstellung (OS) einen Fluidfluss zwischen einer der Anschlussstellen (14, 16) und dem Filterelement (18) ermöglicht und in einer Schließstellung (SS) diesen Fluidfluss unterbindet, und wobei die Ventileinrichtung (34) mittels einer Ansteuereinrichtung (36) zwischen der Öffnungsstellung (OS) und der Schließstellung (SS) bewegbar ist, wobei die eine Ventileinrichtung (34) ein Zuflussventil (38) ist, **dadurch gekennzeichnet, dass** das Zuflussventil (38) im Fluidfluss zwischen dem Zulauf (14) und einer Außenseite (40) des Filterelements (18) angeordnet ist und ein Zuflussventilschließglied (42) aufweist, das durch einen mit einer Öffnung (44) versehenen Zylinderwandabschnitt (46) gebildet ist, der in einem Schlitz (48) im Filtergehäuse (12) bewegbar angeordnet ist; und dass die Öffnung (44) in der Öffnungsstellung (OS) in Überdeckung mit dem Zulauf (14) ist.

2. Filtervorrichtung nach Anspruch 1, **dadurch gekennzeichnet, dass** die Öffnung (44) im Zylinderwandabschnitt (46) die Form eines Langlochs hat.

3. Filtervorrichtung nach Anspruch 1 oder 2, **dadurch gekennzeichnet, dass** der Zylinderwandabschnitt (46) an einem Plattenteil (62) befestigt ist, das zwischen dem Filtergehäuse (12) und dem Filterelement (18) angeordnet ist; und dass der Zylinderwandabschnitt (46) vorzugsweise zumindest einen Pin (58) aufweist, der in ein Loch (60) im Plattenteil (62) eingeschoben ist.

4. Filtervorrichtung nach Anspruch 3, **dadurch gekennzeichnet, dass** das Plattenteil (62) mehrere, vorzugsweise nierenförmige, Öffnungen (64) für den Fluidfluss zwischen Zulauf (14) und der Außenseite (40) des Filterelements (18) aufweist.

5. Filtervorrichtung nach Anspruch 3 oder 4, **dadurch gekennzeichnet, dass** das Plattenteil (62) einen ersten Filterelementstutzen (68) aufweist, in den das Filterelement (18) einschraubbar ist.

6. Filtervorrichtung nach einem der Ansprüche 3 bis 5, **dadurch gekennzeichnet, dass** das Plattenteil (62) zumindest eine Versteifungsstrebe (74) am Filterelementstutzen (68) aufweist.

7. Filtervorrichtung nach einem der Ansprüche 3 bis 6, **dadurch gekennzeichnet, dass** das Plattenteil (62) einen Filtergehäusestutzen (80) aufweist, der vorzugsweise außenumfangsseitig eine Umfangsnut (82) aufweist, in der ein Dichtring (84) zur Abdichtung des Plattenteils (62) gegenüber dem Filtergehäuse (12) anordenbar ist.

8. Filtervorrichtung nach einem der Ansprüche 3 bis 7, **dadurch gekennzeichnet, dass** das Plattenteil (62) auf einer Unterseite (66) durch einen Sprengring (90) im Filtergehäuse (12) festgelegt ist.

9. Filtervorrichtung nach einem der vorstehenden Ansprüche, **dadurch gekennzeichnet, dass** eine weitere Ventileinrichtung (34) ein Abflussventil (94) ist, das im Fluidfluss zwischen einer Innenseite (96) des Filterelements (18) und dem Ablauf (16) angeordnet ist und ein, vorzugsweise kugelabschnittsförmiges, Abflussventilschließglied (98) aufweist, das an einem Anschlag (100), insbesondere am Filtergehäusestutzen (80), dichtend zur Anlage kommt und durch eine Feder (102) in die Schließstellung (SS) beaufschlagt ist.

10. Filtervorrichtung nach Anspruch 9, **dadurch gekennzeichnet, dass** die Feder (102) rückseitig durch einen Dorn (104) des Filtergehäuses (12) geführt ist.

11. Filtervorrichtung nach Anspruch 10, **dadurch gekennzeichnet, dass** das Abflussventilschließglied (98) eine zentrale Bohrung (106) aufweist, in die der Dorn (104) abhängig von der Stellung des Abflussventilschließgliedes (98) einführbar ist.

12. Filtervorrichtung nach einem der Ansprüche 9 bis 11, **dadurch gekennzeichnet, dass** das Abflussventilschließglied (98) eine axial vorstehende Führungshülse (107) aufweist, die an einer Außenseite (108) der Feder (102) anliegt.

13. Filtervorrichtung nach einem der Ansprüche 9 bis 12, **dadurch gekennzeichnet, dass** das Abflussventilschließglied (98) eine Anschlaghülse (110) für die Feder (102) aufweist.

14. Filtervorrichtung nach Anspruch 12 oder 13, **dadurch gekennzeichnet, dass** das Abflussventilschließglied (98) bis auf die Führungshülse (107) und/oder die Anschlaghülse (110) hohl ist.

15. Filtervorrichtung nach einem der Ansprüche 9 bis 14, **dadurch gekennzeichnet, dass** das Abflussventilschließglied (98) in einem zylinderförmigen Hohlraum (112) des Filtergehäuses (12) bewegbar angeordnet ist.

## Claims

1. Filter apparatus with a filter housing (12) which has at least two connection points (14, 16), such as an inlet (14) for unfiltered medium and an outlet (16) for filtrate, and accommodates a replaceable filter element (18), wherein at least one valve device (34) is provided which, in an open position (OS), enables a fluid flow between one of the connection points (14, 16) and the filter element (18) and, in a closed position (SS), prevents this fluid flow, and wherein the valve device (34) is movable between the open position (OS) and the closed position (SS) by means of an actuating device (36), wherein the one valve device (34) is an inflow valve (38), **characterised in that,** the inflow valve 38 is arranged in the fluid flow between the inlet (14) and an outer side (40) of the filter element (18) and has an inflow valve closing member (42) which is formed by a cylinder wall portion (46) that is provided with an opening (44) and which is arranged so as to be movable in a slot (48) in the filter housing (12); and **in that**, in the open position (OS), the opening (44) overlaps the inlet (14).

2. Filter apparatus according to claim 1, **characterised in that** the opening (44) in the cylinder wall portion (46) has the shape of an elongated hole.

3. Filter apparatus according to claim 1 or 2, **characterised in that** the cylinder wall portion (46) is attached to a plate member (62), which is arranged between the filter housing (12) and the filter element (18); and **in that** the cylinder wall portion (46) preferably has at least one pin (58), which is inserted into a hole (60) in the plate member (62).

4. Filter apparatus according to claim 3, **characterised in that** the plate member (62) has a plurality of, preferably kidney-shaped, openings (64) for the fluid flow between the inlet (14) and the outer side (40) of the filter element (18).

5. Filter apparatus according to claim 3 or 4, **characterised in that** the plate member (62) has a first filter element connector (68) into which the filter element (18) can be screwed.

6. Filter apparatus according to one of claims 3 to 5, **characterised in that** the plate member (62) has at least one reinforcement strut (74) on the filter element connector (68).

7. Filter apparatus according to one of claims 3 to 6, **characterised in that** the plate member (62) has a filter housing connector (80), which preferably has a circumferential groove (82) on the outer circumference, in which a sealing ring (84) can be arranged for sealing the plate member (62) with respect to the filter housing (12).

8. Filter apparatus according to one of claims 3 to 7, **characterised in that** the plate member (62) is fixed in the filter housing (12) on an underside (66) by a circlip (90).

9. Filter apparatus according to one of the preceding claims, **characterised in that** a further valve device (34) is a discharge valve (94), which is arranged in the fluid flow between an inner side (96) of the filter element (18) and the outlet (16) and has a discharge valve closing member (98), preferably shaped like a spherical segment, which comes into sealing contact against a limit stop (100), in particular against the filter housing connector (80), and is urged into the closed position (SS) by a spring (102).

10. Filter apparatus according to claim 9, **characterised in that** the spring (102) is guided at the rear by a mandrel (104) of the filter housing (12).

11. Filter apparatus according to claim 10, **characterised in that** the discharge valve closing member (98) has a central bore (106) into which the mandrel (104) can be inserted depending on the position of the discharge valve closing member (98).

12. Filter apparatus according to one of claims 9 to 11, **characterised in that** the discharge valve closing member (98) has an axially protruding guide sleeve (107) which bears against an outer side (108) of the spring (102).

13. Filter apparatus according to one of claims 9 to 12, **characterised in that** the discharge valve closing member (98) has a stop sleeve (110) for the spring (102).

14. Filter apparatus according to claim 12 or 13, **characterised in that** the discharge valve closing member (98) is hollow except for the guide sleeve (107) and/or the stop sleeve (110).

15. Filter apparatus according to one of claims 9 to 14, **characterised in that** the discharge valve closing member (98) is arranged so as to be movable in a cylindrical cavity (112) of the filter housing (12).

## Revendications

1. Installation de filtration comprenant une enveloppe (12) de filtre, qui a au moins deux points (14, 16) de raccordement, comme une arrivée (14) pour du non filtrat et une évacuation (16) pour du filtrat, et dans laquelle est logé un élément (18) de filtre remplaçable, dans laquelle il est prévu au moins un dispositif (34) de soupape, qui, dans une position (OS) d'ouverture, rend possible un flux de fluide entre l'un des points (14, 16) de raccordement et l'élément (18) de filtre et, dans une position (SS) de fermeture, interdit ce flux de fluide, et dans laquelle le dispositif (34) de soupape peut, au moyen d'un dispositif (36) de commande, passer entre la position (OS) d'ouverture et la position (SS) de fermeture, dans lequel le un dispositif (34) de soupape est une soupape (38) d'admission, **caractérisée en ce que** la soupape (38) d'admission est montée dans le flux de fluide entre l'arrivée (14) et une face (40) extérieure de l'élément (18) de filtre et a un élément (42) de fermeture de soupape d'admission, qui est formée par une partie (46) de paroi cylindrique, qui est pourvue d'une ouverture (44) et qui est montée mobile dans une fente (48) de l'enveloppe (12) du filtre ; et **en ce que** l'ouverture (44) est, dans la position (OS) d'ouverture, en recouvrement avec l'arrivée (14).

2. Installation de filtration suivant la revendication 1, **caractérisée en ce que** l'ouverture (44) dans la partie (46) de paroi cylindrique a la forme d'une boutonnière.

3. Installation de filtration suivant la revendication 1 ou 2, **caractérisée en ce que** la partie (46) de paroi cylindrique est fixée à une partie (62) de plaque, qui est disposée entre l'enveloppe (12) de filtre et l'élément (18) de filtre ; et **en ce que** la partie (46) de paroi cylindrique a, de préférence au moins un ergot (58), qui est inséré dans un trou (60) de la partie (62) de plaque.

4. Installation de filtration suivant la revendication 3, **caractérisée en ce que** la partie (62) de plaque a plusieurs ouvertures (64), de préférence réniformes, pour le flux de fluide entre l'arrivée (14) et la face (40) extérieure de l'élément (18) de filtre.

5. Installation de filtration suivant la revendication 3 ou 4, **caractérisée en ce que** la partie (62) de plaque a une première tubulure (68) d'élément de filtre, dans laquelle l'élément (18) de filtre peut être vissé.

6. Installation de filtration suivant l'une des revendications 3 à 5, **caractérisée en ce que** la partie (62) de plaque a au moins une entretoise (74) de raidissement à la tubulure (68) de l'élément de filtre.

7. Installation de filtration suivant l'une des revendications 3 à 6, **caractérisée en ce que** la partie (62) de plaque a une tubulure (80) d'enveloppe de filtre, qui a, de préférence, du côté du pourtour extérieur, une rainure (82) périphérique, dans laquelle une bague (84) d'étanchéité peut être mise pour rendre la partie (62) de plaque étanche vis-à-vis de l'enveloppe (12) de filtre.

8. Installation de filtration suivant l'une des revendications 3 à 7, **caractérisée en ce que** la partie (62) de plaque est, sur une face (66) inférieure, fixée à l'enveloppe (12) de filtre par un jonc (90).

9. Installation de filtration suivant l'une des revendications précédentes, **caractérisée en ce qu'**un autre dispositif (34) de soupape est une soupape (94) d'évacuation, qui est montée dans le flux de fluide entre une face (96) intérieure de l'élément (18) de filtre et l'évacuation (16) et qui a un élément (98) de fermeture de soupape d'évacuation, de préférence en forme de segment sphérique, qui vient en contact avec étanchéité avec une butée (100), en particulier à la tubulure (80) de l'enveloppe de filtre, et qui, dans la position (SS) de fermeture, est soumise à l'effet d'un ressort (102).

10. Installation de filtration suivant la revendication 9, **caractérisée en ce que** le ressort (102) est guidé du côté arrière par un mandrin (104) de l'enveloppe (12) du filtre.

11. Installation de filtration suivant la revendication 10, **caractérisée en ce que** l'élément (98) de fermeture de la soupape d'évacuation a un alésage (106) central, dans lequel le mandrin (104) peut être introduit en fonction de la position de l'élément (98) de fermeture de la soupape d'évacuation.

12. Installation de filtration suivant l'une des revendications 9 à 11, **caractérisée en ce que** l'élément (98) de fermeture de la soupape d'évacuation a un manchon (107) de guidage en saillie axialement, qui s'applique à une face (108) extérieure du ressort (102).

13. Installation de filtration suivant l'une des revendications 9 à 12, **caractérisée en ce que** l'élément (98) de fermeture de la soupape d'évacuation a un manchon (110) de butée pour le ressort (102).

14. Installation de filtration suivant la revendication 12 ou 13, **caractérisée en ce que** l'élément (98) de fermeture de la soupape d'évacuation est creux jusqu'au manchon (107) de guidage et/ou le manchon (110) de butée.

15. Installation de filtration suivant l'une des revendications 9 à 14, **caractérisée en ce que** l'élément (98) de fermeture de la soupape d'évacuation est montée mobile dans un espace (112) cylindrique creux de l'enveloppe (12) du filtre.
